# EUROPEAN PATENT APPLICATION

(11) **EP 1 855 291 A2**
(43) Date of publication of application: **14.11.2007**
(21) Application number: 07010791.7
(22) Date of filing: 13.05.2004
(51) Int. Cl.: G11B 33/04

(54) **Book-like stacked array with cover**

(30) Priority: 13.05.2003 US 470509 P
(62) Divisional of application: 04752261.0
(71) Applicant: MeadWestvaco Corporation, Stamford, CT 06905 (US)
(72) Inventor: Gelardi, John A., Kennebunkport, ME 04046 (US); Exner, Dana, Chicago, IL 60634 (US); Ladwig, David P., Chicago, IL 60622 (US); Prewett, Andrew, Ruscombe Berkshire RG10 9LF (GB)
(74) Representative: Moore, Christopher Mark

(57) **Abstract**

A package comprising a stack of article-holding trays, each tray of the stack being structured directly to receive and retain an article and the package comprising a jacket for enclosing the stack, the jacket comprising a front panel hinged to a spine panel, a back panel and characterised by a joint panel hinged between the spine and back panels, the jacket being attached to the stack such that the spine and joint panel are free of direct connection with the stack.

## Description

### BACKGROUND OF THE INVENTION

The invention relates to stacked arrays of article trays, and more particularly to a hinged stacked array of article trays having a cover with offset attachment to the stack.

Manufactures often desire to package articles that they sell in packages that contain multiples of the article. Often, the package for containing multiples of the article may be used as a permanent storage device for reusable articles.

Trays are often used as storage mechanisms for disc-shaped articles such as compact discs (CD's), digital versatile discs (DVD's) and similarly shaped disc-like information storage mediums. A useful configuration for packaging multiple disc-shaped articles is a stacked array of trays. In such a stacked array, the trays are often hinged to one another for ease in accessing individual trays while maintaining the ability to easily restack. A cover is frequently applied to the stacked array for informational and aesthetic purposes. The cover may be applied so that the individual trays of the array may be accessed in book-like fashion.

A problem in using a stacked array of trays with a cover is that when the trays are pivoted from a single stack configuration, stresses are often place upon the cover that cause the cover to pull away from where it is attached to the trays. This tearing away structurally damages the back portion of the cover and is also undesirable aesthetically. This problem occurs because the trays are rigid and have widths that cannot be fully accommodated by the spine portion of the cover. This problem also arises in other book- like stacked arrays. Thus, it can be appreciated that it would be useful to have a means for covering a stacked array of article trays that does not cause the cover to tear away from the region of connection to the trays.

### BRIEF SUMMARY OF THE INVENTION

According to a first aspect, the invention provides a package comprising a stack of article-holding trays, each tray of the stack being structured directly to receive and retain an article and the package comprising a jacket for enclosing the stack, the jacket comprising a front panel hinged to a spine panel, a back panel and characterised by a joint panel hinged between the spine and back panels, the jacket being attached to the stack such that the spine and joint panel are free of direct connection with the stack.

Preferably, wherein the jacket is attachable to the stack such that fanning the stack of trays is unhindered by the presence of the jacket.

Optionally, wherein each tray has a hinging edge and the hinging edges of the trays are connected to form an aligned hinging face.

Preferably, wherein the article holding trays are each capable of receiving and retaining a media-information holding disc such as a CD or DVD.

Preferably, wherein the back panel comprises two plies of material, the innermost ply affixed to a bottommost tray of the stack and the outermost ply being affixed to the innermost ply and being affixed to the joint panel.

According to a second aspect, the invention provides a jacket for enclosing a stack of article-holding trays connected along an aligned hinging edge, the jacket comprising a front panel, spine panel and a back panel hinged in series, the back panel for attaching the jacket to a stack, characterised by the jacket comprising a joint panel, the joint panel being hinged between the spine and back panels and structured such that the back panel of the jacket is attachable to the stack such that the joint panel and spine panel are free from direct connection with the stack.

Preferably, wherein the back panel comprises two plies of material, the innermost ply being fixable to a bottommost tray of the stack and the outermost ply being affixed to the innermost ply and the joint panel.

According to a third aspect, the invention provides a blank for forming a jacket for enclosing a stack of disc-holding trays, the blank comprising a series of hinged main panels for forming a front panel, spine panel and back panel of a jacket, the back panel for attaching the jacket formed from the blank to a stack of disc-holding trays characterised by the blank comprising a joint panel, the joint panel being formed between the spine and back panels, and structured such that when the blank is formed into a jacket, the joint panel and spine panel are free from connection with the stack

According to a fourth aspect, the invention provides a jacket for enclosing a stack of disc-holding trays coupled together along a common hinging edge, the jacket comprising a series of panels including a back panel and a joint panel, characterised in that the back panel and joint panel are structured and arranged such that when the jacket is attached to a stack, the jacket is hingable about an axis offset inwardly from the common hinging edge of the stack.

According to a fifth aspect, the invention provides a package comprising a stack of disc-holding trays coupled together along a common hinging edge, and a jacket comprising a series of panels including a back panel and a joint panel, characterised in that the back panel and joint panel are structured and arranged such that the jacket is attached to the stack so that the jacket is hingable about an axis offset inwardly of the stack, from the common hinging edge of the stack.

The present invention provides a stacked array of trays for articles having a cover that is placed around the stack in the manner of a book cover. The cover consists of back and front portions connected by a spine. The width of the spine corresponds to the height of the stack of trays. In a preferred embodiment of the invention, the back portion of the cover is affixed to the back of the bottom, or base, tray. A narrow region on the back cover adjacent the spine is not adhered to the bottom panel. In accordance with a further preferred embodiment, the back panel is two-ply with one ply affixed to the bottom/base tray and the ply adjoining the spine containing the narrow region.

Other advantages and objects of the present invention will be apparent from the following description, the accompanying drawings, and the appended claims.

### BRIEF DESCRIPTION OF THE DRAWINGS

Fig. 1 is an isometric illustration of a stacked array of article trays having a cover with offset attachment region, in accordance with a preferred embodiment of the invention.
Fig. 2 is an illustration of the package of Fig. 1 in upright condition showing the individual trays fanned as in a book.
Fig. 3 is an illustration of the package of Fig. 1 in upright condition with the front portion of the cover opened, the spine of the cover pivoted away from the stacked array, and the narrow non-adhered region of the back cover pivoted away from the bottom/base tray.
Fig. 4 is an illustration of the package of Fig. 1 in opened condition wherein some of the trays have been pivoted off of the stack, forming two stacks of approximately equal height.
Fig. 5 is an illustration of the package of Fig. 1 in opened condition wherein substantially all of the trays have been pivoted off of the original stack, leaving only the bottom, or base, tray on the original stack.

### DETAILED DESCRIPTION OF THE INVENTION

Throughout the drawings, the same reference numerals are used to denote the same or like features of the invention.

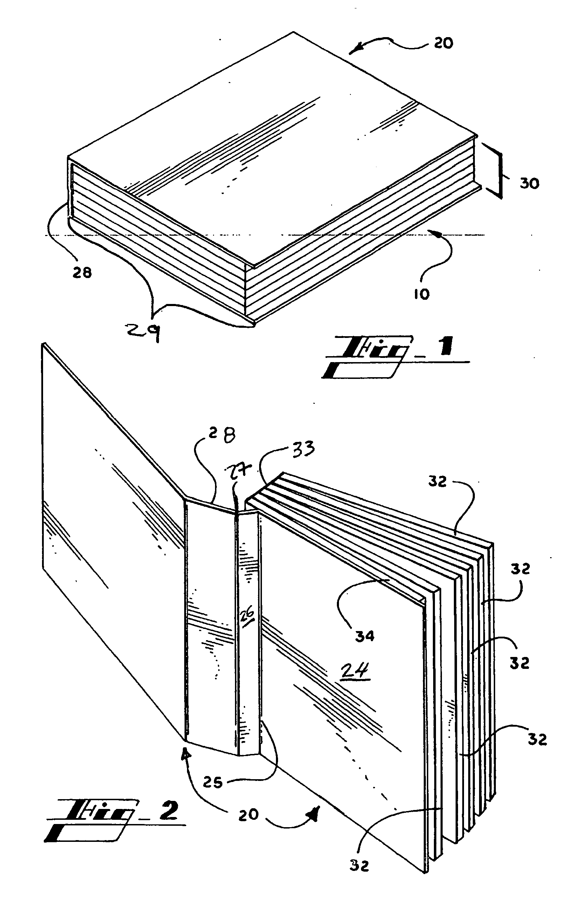

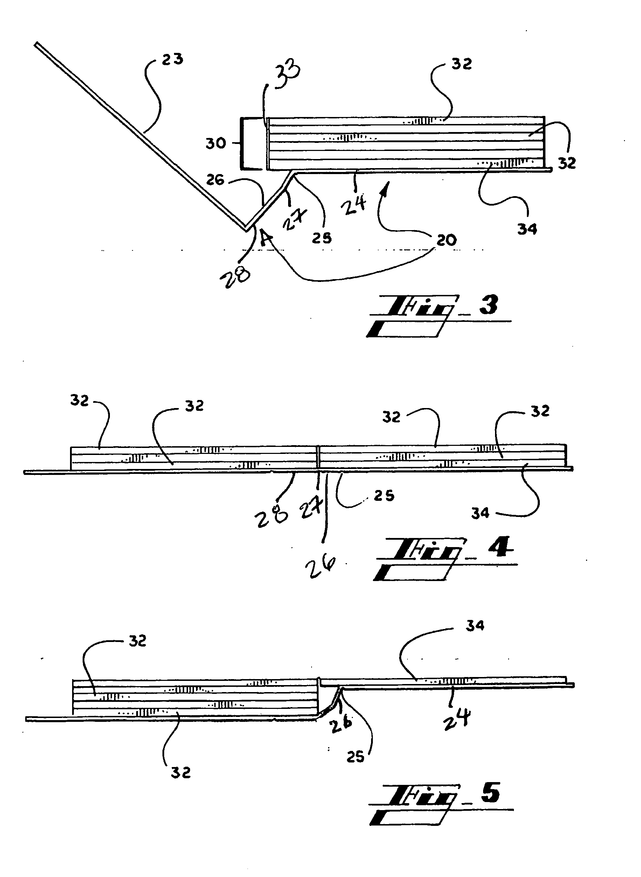

Referring first to Fig. 1, therein is illustrated a package 10 that is a stacked array 30 of trays for articles having a cover 20 in accordance with a preferred embodiment of the invention. Referring now also to Fig. 2, the package 10 of Fig. 1 is shown in upright condition with the individual trays 32 joined along a spine 33 partially fanned like the pages of a book about their region of common joinder that is, a spine 33. In Fig. 2, the elements of the cover 20 can be seen. The cover 20 has a front portion and back portion 24/26 joined by a spine 28. The back portion has one portion, a back cover portion, 24 that is affixed by adherence or other means to the bottom, or base, tray 34 of the array 30 of trays, beyond a line of joinder or hinge line 25 that is offset from the line of joinder or hinge line 27 that hingedly adjoins the cover spine 28 to the back cover 24/26. A strip 26 completes the back cover. The strip is shown and noted to be fairly narrow in the preferred embodiment illustrated but the width may vary. The narrower the strip 26, the wider the remainder of the back portion 24 of the cover. The wider the back portion 24 that is adhered to the bottom/base tray, the more firmly affixed is the back portion to the bottom/base tray 34.

In the preferred embodiment, the strip 26 is defined by substantially parallel lines of demarcation, such as fold or score lines. One line of demarcation 25 creates a pivot line that separates the main portion back portion of the cover 24 from the strip 26. The second line of demarcation 27 separates the non-affixed strip 26 of the back portion of the cover 20 from the spine 26.

Referring now to Fig. 3, in another view of the package of Fig. 1 shown in upright condition, from a more top isometric view, the manner in which the cover is offset at the back portion by the strip 26. The strip 26 is shown pivoted away from the array 30 of trays along the line of demarcation (fold line) 25 of the back portion of the cover.

Referring now to Fig. 4, the package of Fig 1 is shown open in the manner of a book with some of the trays 32 pivoted away from the original stack. This illustration demonstrates that package opened to a condition of no more stacks on the open portion than on the original stack where the problem of pressure being exerted against the spine and back portion of the cover has not occurred.

Referring now to Fig. 5, therein is shown the package of Fig. 1 opened to a condition where the stack of trays 32 that have been pivoted away from the original stack (and therefore the bottom/base tray 34) exceeds the number (and therefore height) of trays in the original stack (base tray stack). The manner in which pressure is exerted by the removed stack against the spine and back portion of the cover is shown. The manner in which relief is provided by the offset of the non-adhered strip 26 is also shown. The relief provided by the offset mitigates tearing or other undesirable effects of pressure.

Referring now back to Figs 2, 3, 4 and 5, an optional feature of the invention is illustrated wherein the back portion of the cover is two ply with the main back cover portion 24 and its adjoining strip 26 forming the outer ply and a second panel 23 forming an inner play that is affixed to the bottom/base tray 34. This configuration provides a panel 23 that is affixed to the bottom/base tray at the greatest number of points, the main portion of the back cover region 24 is firmly affixed to the inner ply 23 and the un-adhered strip provides the offset.

The present invention provides a stacked array of trays for articles having a cover that is placed around the stack in the manner of a book cover. The cover consists of back and front portions connected by a spine. The width of the spine corresponds to the height of the stack of trays. The back portion of the cover is affixed to the back of the bottom tray. However, a region of the back cover adjacent the spine is not adhered to the bottom panel.

Modifications may be made in the foregoing without departing from the scope and spirit of the claimed invention. For example, although the preferred embodiment illustrated and described is directed to trays in particular the invention is equally applicable to stacked arrays of other substantially planar or planar-like articles or elements.

The figures forming a part of this specification convey the best mode for carrying out the invention known to the inventor at the time of filing the patent application. The figures are further presented to enable those skilled in the art to make and use the invention. After learning of the details of the invention as presented herein, including the figures, it is likely that alternative embodiments could be devised according to the invention, which have a much different appearance than the embodiments disclosed in the accompanying figures. The figures forming a part of the specification convey utilitarian aspects of the invention and the preferred embodiments, and also include ornamental features which are not necessary to the utilization of the invention.

## Claims

1. A package comprising a stack of article-holding trays, each tray of the stack being structured directly to receive and retain an article and the package comprising a jacket for enclosing the stack, the jacket comprising a front panel hinged to a spine panel, a back panel and **characterised by** a joint panel hinged between the spine and back panels, the jacket being attached to the stack such that the spine and joint panel are free of direct connection with the stack.

2. A package according to claim 1 wherein the jacket is attachable to the stack such that fanning the stack of trays is unhindered by the presence of the jacket.

3. A package according to claim 1 or claim 2 wherein each tray has a hinging edge and the hinging edges of the trays are connected to form an aligned hinging face.

4. A package according to claim 1 or 2 wherein the article holding trays are each capable of receiving and retaining a media-information holding disc such as a CD or DVD.

5. A package according to any preceding claim wherein the back panel comprises two plies of material, the innermost ply affixed to a bottommost tray of the stack and the outermost ply being affixed to the innermost ply and being affixed to the joint panel.

6. A jacket for enclosing a stack of article-holding trays connected along an aligned hinging edge, the jacket comprising a front panel, spine panel and a back panel hinged in series, the back panel for attaching the jacket to a stack, **characterised by** the jacket comprising a joint panel, the joint panel being hinged between the spine and back panels and structured such that the back panel of the jacket is attachable to the stack such that the joint panel and spine panel are free from direct connection with the stack.

7. A jacket according to claim 5 wherein the back panel comprises two plies of material, the innermost ply being fixable to a bottommost tray of the stack and the outermost ply being affixed to the innermost ply and the joint panel.

8. A blank for forming a jacket for enclosing a stack of disc-holding trays, the blank comprising a series of hinged main panels for forming a front panel, spine panel and back panel of a jacket, the back panel for attaching the jacket formed from the blank to a stack of disc-holding trays **characterised by** the blank comprising a joint panel, the joint panel being formed between the spine and back panels, and structured such that when the blank is formed into a jacket, the joint panel and spine panel are free from connection with the stack

9. A jacket for enclosing a stack of disc-holding trays coupled together along a common hinging edge, the jacket comprising a series of panels including a back panel and a joint panel, **characterised in that** the back panel and joint panel are structured and arranged such that when the jacket is attached to a stack, the jacket is hingable about an axis offset inwardly from the common hinging edge of the stack.

10. A package comprising a stack of disc-holding trays coupled together along a common hinging edge, and a jacket comprising a series of panels including a back panel and a joint panel, **characterised in that** the back panel and joint panel are structured and arranged such that the jacket is attached to the stack so that the jacket is hingable about an axis offset inwardly of the stack, from the common hinging edge of the stack.
